# EUROPEAN PATENT SPECIFICATION

(11) **EP 1 223 768 B1**
(45) Date of publication and mention of the grant of the patent: **03.12.2003**
(21) Application number: 02000195.4
(22) Date of filing: 10.01.2002
(51) Int. Cl.: H04Q 7/32

(54) **Mobile communication apparatus and method using plural IC cards**
Vorrichtung und Verfahren zur Mobilkommunikation mit mehreren IC Karten
Appareil et procédé pour la communication mobile utilisant plusieures cartes IC

(30) Priority: 12.01.2001 JP 2001005553
(43) Date of publication of application: 17.07.2002
(73) Proprietor: Kabushiki Kaisha Toshiba, Tokyo (JP)
(72) Inventor: Sato, Hiroaki, Intellectual Property Division, Minato-ku, Tokyo 105-8001 (JP)
(74) Representative: HOFFMANN - EITLE

(56) References cited:
- EP-A- 1 051 052
- EP-A- 1 098 543
- EP-B- 0 586 081
- WO-A-00/41409
- DE-A- 19 823 074

## Description

This invention relates to a communication apparatus permitting insertion of an integrated circuit (IC) card for communicating, and particularly relates to a control method carried out by a communication apparatus into which a plurality of IC cards may be inserted.

A Subscriber Identification Module (SIM) card is necessary for the Global System for Mobile communication (GSM), which is standardized in Europe. The SIM card can comprise a plurality of integrated circuits (IC). The SIM card is used for communicating with a mobile communication network. The SIM card includes information such as an authentication algorithm required for communication, an identification number, etc. The identification number is used for identifying a subscriber as a rightful user in the mobile network. A mobile phone in GSM can communicate with the network upon inserting the SIM card into the phone.

Now, a third generation mobile phone system, which is called International Mobile Telecommunications 2000 (IMT2000), is being standardized all over the world. In the IMT2000, a Universal Subscriber Identity Module (USIM) card is necessary for communicating with a mobile communication network. The USIM card has basically the same function as the SIM card in the GSM.

The USIM card includes data such as an authentication algorithm required for communication and an identification number for identifying a subscriber as a rightful user in the mobile communication system, same as the SIM card.

The USIM card has a data storage section. The identification number is included in the storage section "Elementary File _ International Mobile Subscriber Identity (EF_IMSI) in an Elementary File (EF)" as data. The mobile phone informs the mobile communication network of the identification number, for identifying the subscriber. The EF_IMSI also includes a code indicating a home country of the network to which the mobile phone belongs.

For example, a subscriber A has a USIM card whose home country code is Japanese country code "81", and whose whole telephone number is "09001234567", and a subscriber B has a USIM card whose home country is Japanese country code "81". When they are located in a roaming country, and subscriber B calls subscriber A, subscriber B has to input the telephone number "81+09001234567". In this case, at first, subscriber A's phone accesses a home network in its home country. After accessing the home network, the subscriber's phone accesses a roaming network in a roaming country. Accordingly, although subscriber A and subscriber B are located in the same roaming country and they have the same home country code, subscriber A has to pay an international call charge. Thus, a call charge is not determined by only the location of a calling subscriber and a called subscriber, but also depends on the home country code of the USIM card of the calling subscriber and that of the called subscriber. To avoid such charges it is advantageous for a user to switch-out plural USIM cards having different home country codes.

DE-A-19823074 discloses a mobile station, a mobile radio communication network and a communication method using several subscriber profiles, which provide each user with a flexible control over several subscriber profiles to which each user has a subscription. The station includes a recording device for two or more subscriber identification modules which have subscriber profile data sets stored in a home location register of a network and in the mobile station. The mobile station may send to a switching means of a network a detach message identifying the respective subscriber identity module. Informing the network of data in the activated IC unit/units by a mobile station is not disclosed. Further, selecting an activated IC unit for use in establishing a communication link with the network based upon data broadcasted from the network is not disclosed.

In consideration of the above situation, an object of the present invention is to provide a mobile communication apparatus capable of setting a plurality of IC cards to communicate with a network, wherein each of the IC cards has data to communicate with the network. As usual herein, "IC card" includes, but is not limited to thin card-like structures. The term encompasses integrated circuit modules of units of various types and provided with various physical configurations that permit attachment/detachment of the same from a host apparatus.

In a first aspect, the present invention provides a mobile communication apparatus for communicating with a network selectively utilizing a plurality of IC units connected to the apparatus, each of the IC units having data for establishing a communication link with the network. A detector is configured to detect each of the IC units connected to the apparatus. An activator is configured to activate at least one of the detected IC units for communication with the network. A controller is configured to inform the network of data in the activated IC unit(s).

This invention also provides a method for selectively utilizing a plurality of IC units connected to a mobile communication apparatus for communicating with a network, each of the IC units having data for establishing a communication link with the network. In the method, each of the IC units connected to the apparatus is detected. At least one of the detected IC units is activated for communication with the network, and the network is informed of data in the activated IC unit(s).

In a third aspect, the invention provides a mobile communication apparatus for receiving a plurality of IC units to communicate with a network, each of the IC units having data for establishing a communication link with the network. Pluralities of sockets are configured to receive the plurality of IC units. A detector is configured to detect an IC unit received in a socket. An activator is configured to activate the detected IC unit for communication with the network. A controller is configured to inform the network of data in the activated IC unit.

In a fourth aspect, the invention provides a method carried out in a mobile communication apparatus for communicating with a network, the apparatus having a plurality of sockets for receiving a plurality of IC units, and each of the IC units having data for establishing a communication link with the network. An IC unit received in a socket is detected. The detected IC unit is activated for communication with the network, and the network is informed of data in the activated IC unit.

The above and other objects, features and advantages of the present invention will be readily apparent and fully understood from the following detailed description of preferred embodiments, taken in connection with the appended drawings.

This summary of the invention does not necessarily describe all necessary features so that the invention may also be a sub-combination of these described features as far as comprised by the scope of the attached claims.

The invention can be more fully under stood from the following detailed description when taken in conjunction with the accompanying drawings, in which:
FIG. 1 is a block diagram showing functional elements of a mobile communication apparatus able to detachably mount a USIM card in one embodiment of the invention.
FIG. 2 is a block diagram showing in more detail functional elements of the mobile communication apparatus illustrated in FIG. 2.
FIG. 3 is a graphical representation of a process that may be carried out by the communication apparatus shown in FIGS. 1 and 2, when a USIM card is inserted into each of plural sockets of the communication apparatus.
FIG. 4 is a graphical representation of another process that may be carried out by the communication apparatus shown in FIGS. 1 and 2, when a USIM card is inserted into each of the plural sockets of the communication apparatus.
FIG. 5 is a graphical representation of another process that may be carried out by the communication apparatus shown in FIGS. 1 and 2, when USIM cards are respectively inserted into the plural sockets of the communication apparatus.
FIG. 6 is a graphical representation of a process carried out by the communication apparatus shown in FIGS. 1 and 2, when a USIM card is inserted into one of the plural sockets of the communication apparatus and another USIM card is then further mounted in another one of the sockets.
FIG. 7 is a graphical representation of a process carried out by the mobile communication apparatus shown in FIGS. 1 and 2, when USIM cards are respectively inserted into the plural sockets of the communication apparatus and one of the USIM cards is then pulled out of its socket.
FIG. 8 is a graphical representation of a process carried out by the mobile communication apparatus shown in FIGS. 1 and 2 after USIM cards are respectively inserted into the plural sockets of the communication apparatus and location registration is completed (incoming call).
FIG. 9 is a graphical representation of a process carried out by the communication apparatus shown in FIGS. 1 and 2 after USIM cards are respectively inserted into the plural sockets of the mobile communication apparatus and location registration is completed (outgoing call).
FIG. 10 is a graphical representation of a process for activating one of the USIM cards carried out by the mobile communication apparatus shown in FIGS. 1 and 2, after the USIM cards are respectively inserted into the plural sockets of the mobile communication apparatus.
FIG. 11 is a graphical representation of a process for deactivating one of the USIM cards carried out by the mobile communication apparatus shown in FIGS. 1 and 2, after the USIM cards are respectively inserted into the plural sockets of the mobile communication apparatus and are respectively activated.
FIG. 12 is a graphical representation of a process for selectively allowing communication with respect to USIM cards carried out by the mobile communication apparatus shown in FIGS. 1 and 2, after the USIM cards are respectively inserted into the plural sockets of this mobile communication apparatus and location registration is completed (outgoing call).
FIG. 13 is a graphical representation of a process for selectively allowing signal arrival with respect to USIM cards carried out by the mobile communication apparatus shown in FIGS. 1 and 2, after the USIM cards are respectively inserted into the plural sockets of this mobile communication apparatus and location registration is completed (incoming call).
FIG. 14 is a graphical representation of a process of signal transmission and arrival performed by automatically selecting for communication one of plural USIM cards mounted in the mobile communication apparatus shown in FIGS. 1 and 2.

A control method carried out in a communication apparatus using an IC card in one embodiment of the invention will be explained with reference to the drawings. In this embodiment, the communication apparatus is a radio communication apparatus and the Universal Subscriber Identity Module (USIM) card is an IC card.

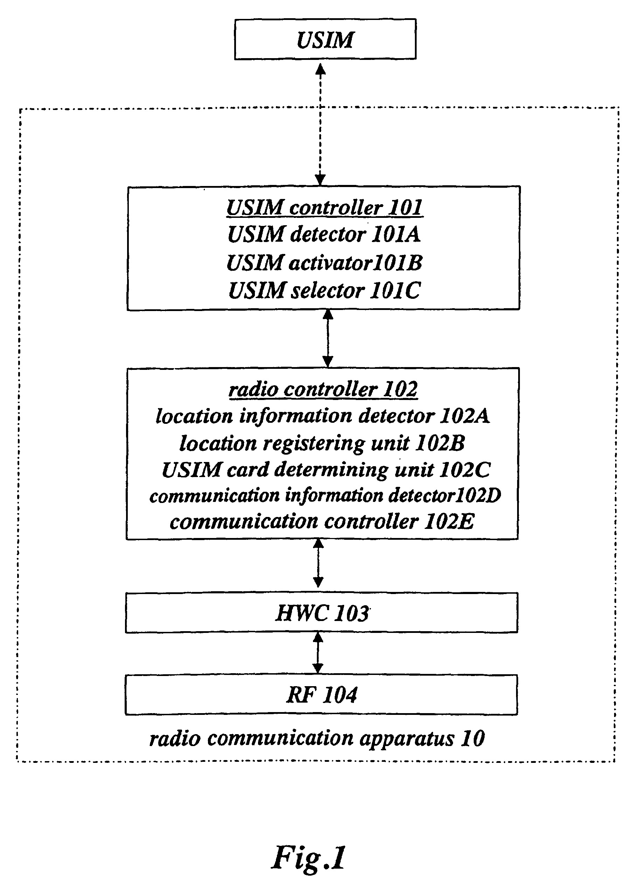

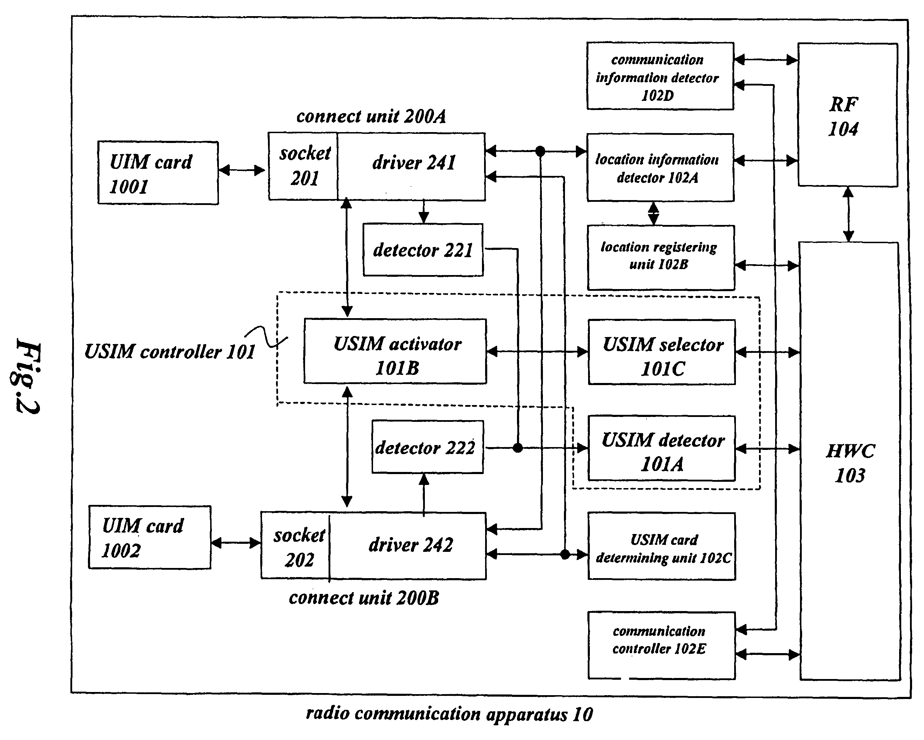

Referring to FIGS. 1 and 2, illustrated is a radio communication apparatus 10 to which a USIM card 1001 and 1002 may be detachably mounted. Each of USIM cards 1001 and 1002 stores various kinds of information, including identification information for identifying the subscriber in a mobile communication network, and a Mobile Country Code (MCC). USIM card 1001 and 1002 each have a data storage section. The storage section includes an Elementary File (EF). The EF includes a field "EF_IMSI". The EF_IMSI includes the MCC. The MCC identifies the country of a mobile network with which a subscriber contracts.

Radio communication apparatus 10 has connecting units 200A and 200B as shown in FIG. 2. Connecting unit 200A has a socket 201 and a driver 241.
Connecting unit 200B has a socket 202 and a driver 242. Socket 201 is used for connecting a USIM card. Driver 241 drives the connected USIM card. Socket 202 is used for connecting a USIM card. Driver 242 drives the connected USIM card.

Connecting units 200A and 200B are connected to a USIM controller 101 for controlling the USIM card, as shown in FIG. 1. The USIM controller includes a USIM detector 101A, a USIM activator 101B and a USIM selector 101C, as shown in FIG. 1.

As shown in FIG. 2, USIM detector 101A detects an attachment or detachment of USIM card 1001 in response to a signal from a detector 221 for detecting a mounting of the USIM card 1001 in socket 201. USIM detector 101A also detects an attachment or detachment of USIM card 1002 in response to a signal from a detector 222 for detecting a mounting of USIM card 1002 in the socket 202.

USIM activator 101B activates USIM card 1001 or USIM card 1002 for communicating with a mobile communication network. When USIM activator 101B activates USIM card 1001, it deactivates USIM card 1002. When USIM activator 101B activates the USIM card 1002, it deactivates USIM card 1001. USIM activator 101B has a function of initializing the activated USIM card 1001, 1002. A USIM selector 101C selects one or more USIM cards for activating (as will be described).

Radio communication apparatus 10 has a radio controller 102, as shown in FIG. 1. Radio controller 102 has a location information detector 102A, a location registering unit 102B, a USIM card determining unit 102C, a communication information detector 102D and a communication controller 102E. Location detector 102A detects location information relative to an existing location of communication apparatus 10. For example, location information detecting unit 102A obtains a MCC. The MCC includes information identifying a home country. A location registering unit 102B registers the detected information in a storing unit. USIM card determining unit 102C determines a USIM card for communicating (as will be described). Communication information detector 102D detects information from the determined USIM card for communicating with a mobile communication network. Communication controller 102E controls communication with a mobile communication network.

Communication apparatus 10 has a hardware control unit (HWC) 103 for controlling hardware in communication apparatus 10, and an RF section 104 for communicating with a mobile communication network. RF section 104 receives data over a radio channel from the mobile communication network. HWC 103 reads the received data and inputs the read data to other parts of the radio communication apparatus. For example, RF section 104 receives location information and communication information for establishing a communication link. The received location information is inputted to location information detecting unit 102A. The received communication information is inputted to communication information detector 102D.

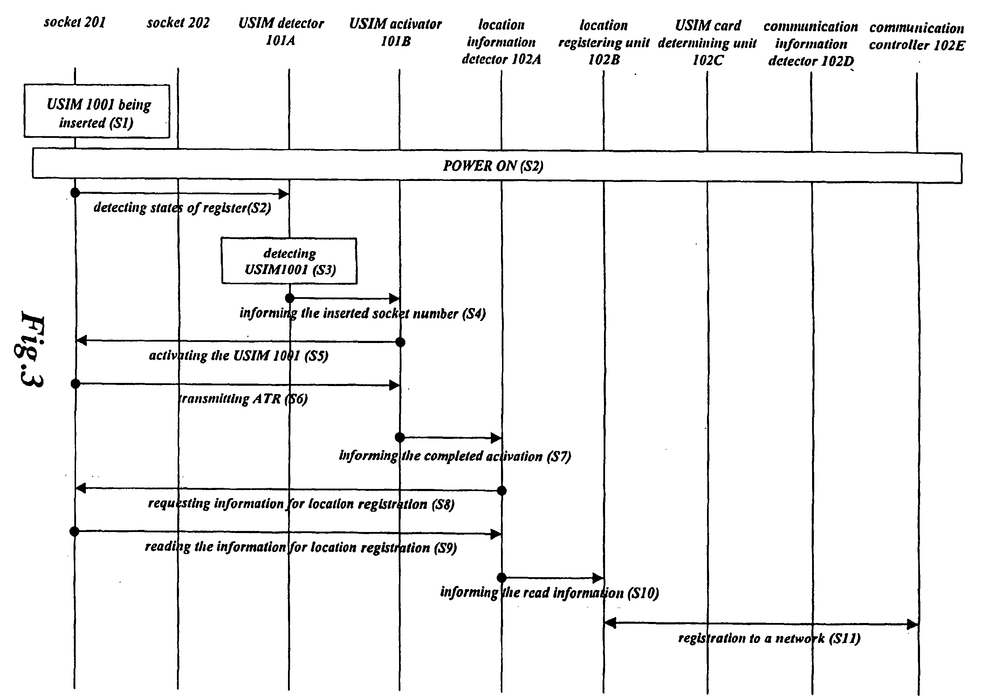

FIG. 3 is one example of a sequence executed by each functional block shown in FIGS. 1 and 2. An operation of one embodiment of this invention will be explained with reference to FIG. 3. FIG. 3 shows a sequence carried out when USIM 1001 is inserted in socket 201.

When a power source in the communication apparatus is turned on by a user or automatically after the USIM card 1001 is inserted to the socket 201 (S1), the detector 221 detects states of a register in driver 241 (S2). USIM detector 101A detects that USIM 1001 is inserted in socket 201 with reference to the detected states (S3). USIM detector 101A informs USIM activator 101B of the socket number into which the card is inserted (S4). USIM activator 101B activates USIM 1001 inserted in socket 201 (S5). In this action, power and clock signals are supplied to USIM 1001 for communicating with a mobile network using USIM 1001.

After being activated, USIM 1001 transmits "Answer to Reset" data (ATR) to USIM activator 101B (S6). USIM activator 101B can recognize that activation of USIM card 1001 has been completed upon receiving the ATR. USIM activator 101B informs location information detector 102A that activation of USIM card 1001 has been completed (S7).

After being notified that the activation of USIM card 1001 has been completed, location information detector 102A requests, for reading, information from USIM card 1001 for location registration of the card to the mobile network 1001(S8) and reads the necessary information from USIM 1001 (S9). Location information detector 102A informs location registering unit 102B of the read information (S10). Location registering unit 102B informs the mobile network of the read information for communicating with it. Thus, radio communication apparatus 10 communicates with the mobile network using USIM card 1001 (S11).

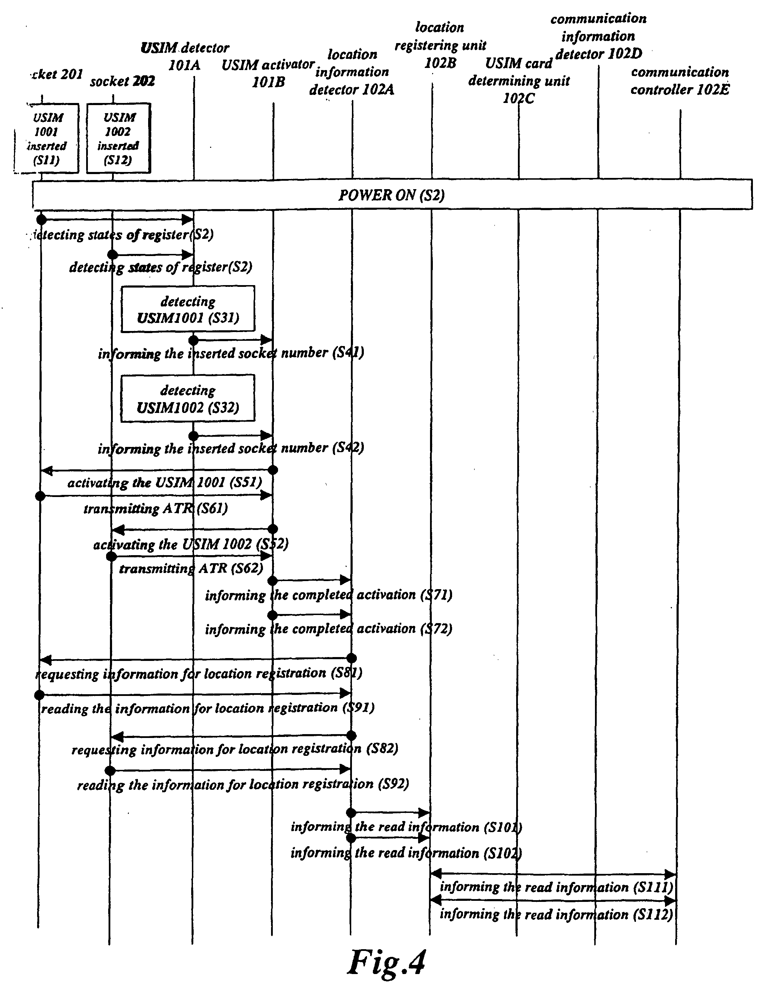

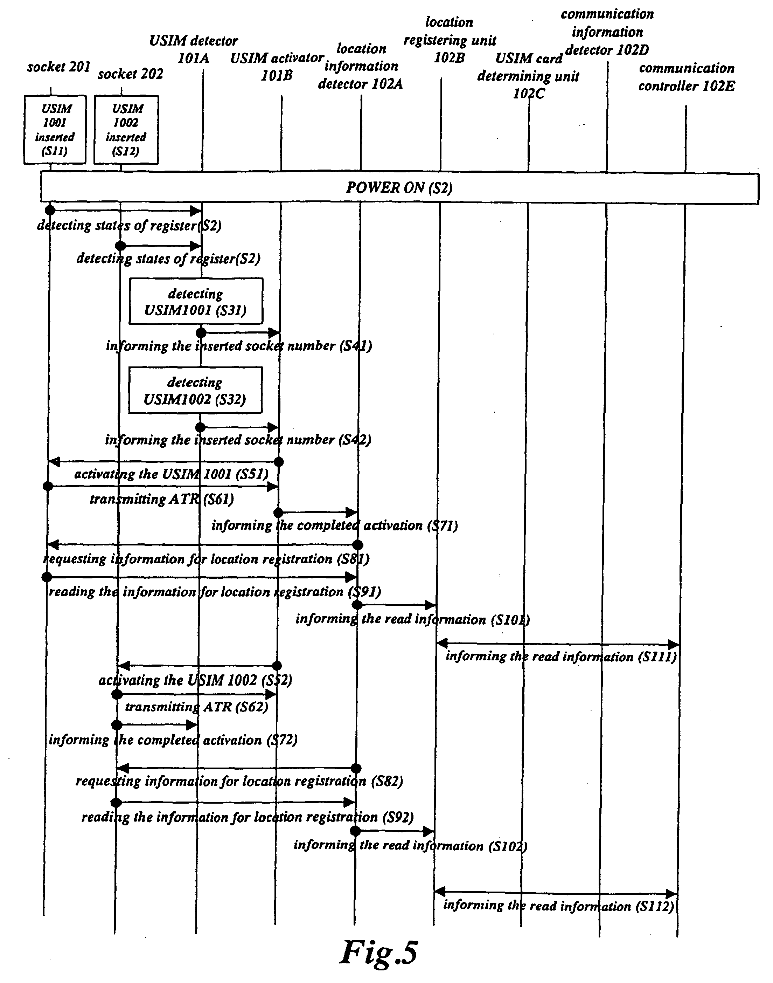

Each of FIGS. 4 and 5 shows a location registering process when plural USIM cards are inserted into radio communication apparatus 10. FIG. 4 shows the process in which a location registration is executed by repeating steps with respect to USIM cards 1001 and 1002.

When a power source in the communication apparatus is turned on by a user or automatically after USIM card 1001 is inserted into socket 201 (S11) and USIM card 1002 is inserted to the socket 202 (S12), detector 221 detects the states of the registers in drivers 241 and 242 (S2). USIM detector 101A detects that USIM 1001 is inserted in socket 201 with reference to the detected states (S31). The USIM detector informs USIM activator 101B of the occupied socket number (S41). Likewise, USIM detector 101A detects that USIM 1001 is inserted in socket 202 with reference to the detected states (S32), and informs USIM activator 101B of the occupied socket number (S42).

USIM activator 101B activates USIM 1001 inserted in socket 201 (S51). In this action, power and clock signals are supplied to USIM 1001, for communicating with a mobile network using USIM 1001. After being activated, USIM 1001 transmits ATR to USIM activator 101B (S61). USIM activator 101B can recognize that the activation of USIM card 1001 has been completed upon receiving the ATR.

USIM activator 101B activates USIM 1002 inserted in socket 202 (S52). In this action, power and clock signals are supplied to USIM 1002, for communicating with a mobile network using USIM 1002. After being activated, USIM 1002 transmits ATR to USIM activator 101B (S62). USIM activator 101B can recognize that the activation of USIM card 1002 has been completed upon receiving the ATR.

USIM activator 101B informs location information detector 102A that the activation of USIM card 1001 has been completed (S71). USIM activator 101B informs location information detector 102A that the activation of USIM card 1002 has been completed (S72).

After receiving notification that the activation of USIM card 1001 has been completed, location information detector 102A requests, for reading, information for location registration of card 1001 to a mobile network, and reads the necessary information from the USIM 1001 (S91). After receiving notification that the activation of USIM card 1002 has been completed, location information detector 102A requests, for reading, information for location registration of card 1002 to a mobile network, and reads the necessary information from USIM 1002 (S92).

Location information detector 102A informs location registering unit 102B of the information read from USIM 1001 (S101). Location information detector 102A informs location registering unit 102B of the information read from USIM 1002 (S102). Location registering unit 102B informs the mobile network of the read information for communicating using USIM card 1001 (S111). Location registering unit 102B informs the mobile network of the read information for communicating using USIM card 1002 (S112).

FIG. 5 shows an alternative process in which USIM card 1001 is processed from the activation to the location registration, after detection of the insertion of each of USIM cards 1001 and 1002, and USIM card 1002 is then processed from the activation to the location registration processing.

When a power source in the communication apparatus is turned on by a user or automatically after USIM card 1001 is inserted into the socket 201 (S11), and the USIM card 1002 is inserted into socket 202 (S12), detector 221 detects states of the registers in drivers 241 and 242 (S2). USIM detector 101A detects that the USIM 1001 is inserted in socket 201 with reference to the detected states (S31). USIM detector 101A informs USIM activator 101B of the occupied socket number (S41). USIM detector 101A detects that USIM 1001 is inserted into socket 202 with reference to the detected states (S32). USIM detector 101A informs USIM activator 101B of the inserted socket number (S42). USIM activator 101B activates USIM 1001 inserted in socket 201 (S51). In this action, power and clock signals are supplied to USIM 1001 for communicating with a mobile network using the USIM 1001.

After being activated, USIM 1001 ATR to USIM activator 101B (S61). USIM activator 101B can recognize that the activation of USIM card 1001 has been completed upon receiving the ATR. USIM activator 101B informs location information detector 102A that the activation of USIM card 1001 has been completed (S71). After receiving notification that the activation of USIM card 1001 has been completed, location information detector 102A requests, for reading, information for location registration of card 1001 to a mobile network (S81), and reads the necessary information from USIM 1001 (S91). Location information detector 102A informs location registering unit 102B of the information read from USIM 1001 (S101). Location registering unit 102B informs the mobile network of the read information, for communicating using USIM card 1001 (S111). USIM activator 101B activates USIM 1002 inserted in socket 202 (S52). In this action, power and clock signals are supplied to USIM 1002 for communicating with a mobile network using USIM 1002.

After being activated, USIM 1002 transmits ATR to USIM activator 101B (S62). USIM activator 101B can recognize that the activation of USIM card 1002 has been completed by receiving the ATR. USIM activator 101B informs location information detector 102A that activation of USIM card 1002 has been completed (S72). After receiving notification that the activation of USIM card 1002 has been completed, location information detector 102A requests, for reading, information for location registration of card 1002 to a mobile network (S82), and reads the necessary information from USIM 1002 (S92). Location information detector 102A informs location registering unit 102B of the information read from USIM 1002 (S102). Location registering unit 102B informs of mobile network of the read information, for communicating using USIM card 1002 (S112).

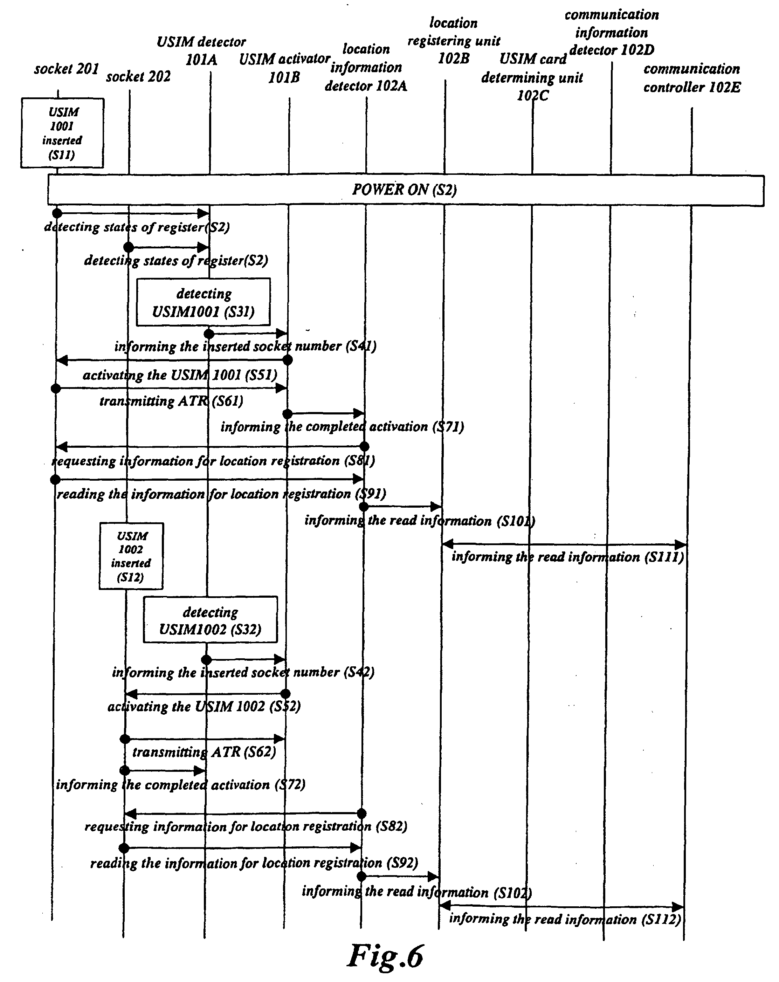

FIG. 6 shows a sequence when USIM card 1001 is inserted at power-up of communication apparatus 10, and subsequently a second USIM card 1002 is additionally inserted. In this sequence, USIM detector 101A detects the new insertion of USIM card 1002 with reference to a USIM card attachment-detachment status register, utilizing interruption processing.

When a power source in the communication apparatus is turned on by a user or automatically after USIM card 1001 is inserted into socket 201 (S11), detector 221 detects states of register in driver 241 (S2). USIM detector 101A detects that USIM card 1001 is inserted in socket 201 with reference to the detected register states (S31). USIM detector 101A informs USIM activator 101B of the inserted socket number (S41). USIM activator 101B activates USIM card 1001 inserted in socket 201 (S51). In this action, power and clock signals are supplied to USIM card 1001, for communicating with a mobile network with using USIM 1001. After being activated, USIM 1001 transmits ATR to USIM activator 101B (S61). USIM activator 101B can recognize that the activation of the USIM card 1001 has been completed upon receiving the ATR. The USIM activator 101B informs location information detector 102A that the activation of USIM card 1001 has been completed (S71).

After receiving notification that the activation of USIM card 1001 has been completed, location information detector 102A requests, for reading, information for location registration of card 1001 to a mobile network (S81), and reads the necessary information from USIM 1001 (S91). Location information detector 102A informs location registering unit 102B of the information read from USIM 1001 (S101). Location registering unit 102B informs the mobile network of the read information, for communicating using USIM card 1001 (S111).

When a power source in the communication apparatus is turned on by a user or automatically, after USIM card 1001 is inserted into socket 202 (S12), detector 222 detects states of register in driver 242 (S2). USIM detector 101A detects that USIM card 1002 is inserted in socket 202, with reference to the detected states (S32). The USIM detector informs USIM activator 101B of the inserted socket number (S42).

USIM activator 101B activates USIM card 1002 inserted in socket 202 (S52). In this action, power and clock signals are supplied to USIM card 1002, for communicating with a mobile network using USIM card 1002. After being activated, USIM card 1002 transmits ATR to USIM activator 101B (S62). The USIM activator 101B can recognize that the activation of the USIM card 1002 has been completed upon receiving the ATR. USIM activator 101B informs location information detector 102A that the activation of the USIM card 1002 has been completed (S72). After receiving notification that the activation of USIM card 1002 has been completed, location information detector 102A requests, for reading, information for location registration of card 1002 to a mobile network (S82), and reads the necessary information from USIM 1002 (S92).

Location information detector 102A informs location registering unit 102B of the information read from USIM 1002 (S102). Location registering unit 102B informs the mobile network of the read information, for communicating using USIM card 1002 (S112).

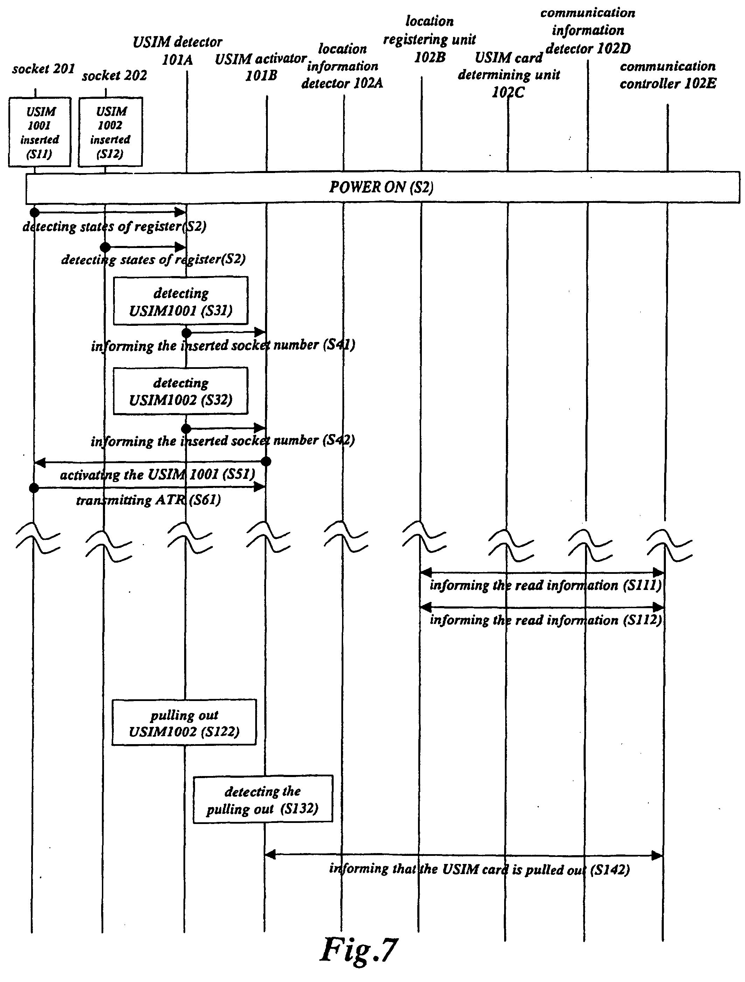

FIG. 7 shows an exemplary sequence carried out when USIM card 1002 is pulled out of socket 202 during a powered-up state. Process steps S11 to S112 in FIG. 7 are the same as the correspondingly numbered steps shown in FIG. 5.

When USIM card 1002 is pulled out of socket 202 (S122), USIM detector 101A detects the pulling-out of the USIM card 1002 with reference to the attachment-detachment status register of USIM card 1002, utilizing interruption processing (S132). USIM detector 101A informs communication controller 102E that USIM card 1002 is removed (S142). Communication controller 102E inhibits the communication using USIM card 1002.

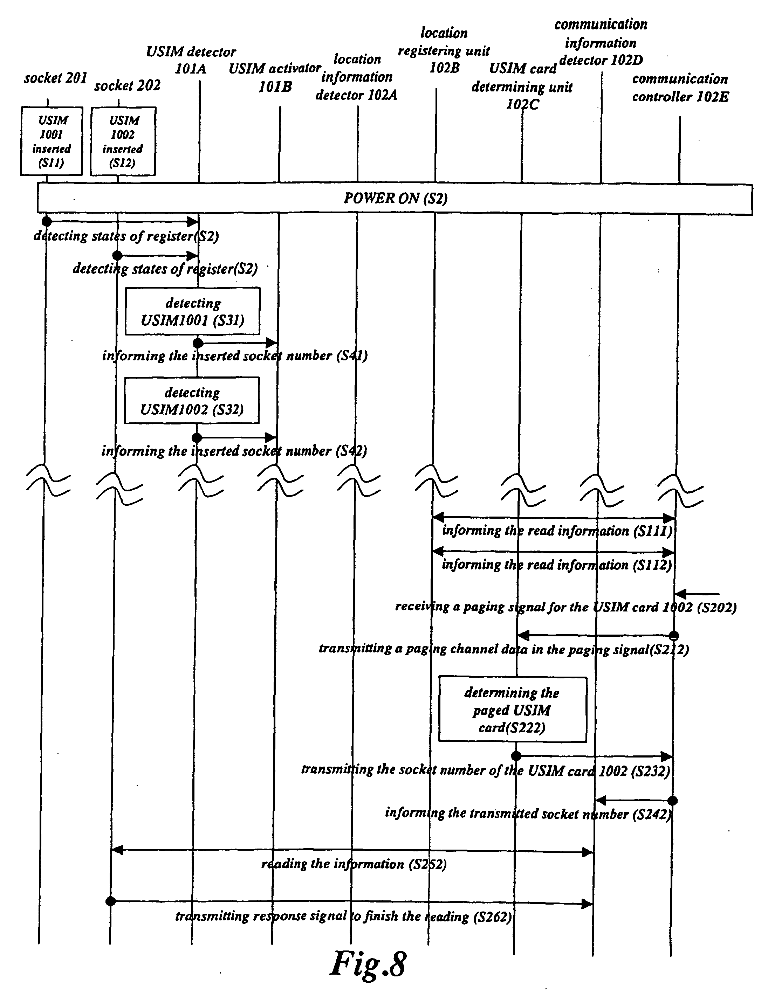

FIG. 8 shows an example of an incoming call initiating paging process carried out after a location registration using plural USIM cards is completed. The steps S11, S12, S2, S31, S41, S32, S42, S111 and S112 shown in FIG. 8 are the same as the correspondingly numbered steps shown in FIG. 4. In this embodiment, USIM card 1002 in the radio communication apparatus is paged.

The radio communication apparatus in this embodiment monitors a paging signal over a radio channel. A mobile network broadcasts the paging signal over the radio channel to initiate a communication link. By the monitoring, communication controller 102E in the radio communication apparatus determines whether or not a paging signal for paging the apparatus is received. When communication controller 102E determines that the received paging signal is for radio communication apparatus (S202), paging channel data included in the paging signal is transmitted to USIM card determining unit 102C for identifying a paged USIM card (S212). The mobile network has previously been informed, during the location registering process, of the radio communication apparatus information, including information about the USIM cards inserted into the apparatus.

USIM card determining unit 102C determines whether the received paging signal is paging USIM card 1001 or USIM card 1002, based on the paging channel data received from communication controller 102E (S222). In this example, the received paging signal is for paging USIM card 1002. After determining the paged card, USIM card determining unit 102C transmits the socket number of USIM card 1002 to communication controller 102E (S232). Communication controller 102E informs communication information detector 102D of the transmitted socket number, which indicates USIM card 1002 as the card from which information for communicating with the mobile network (S242) is to be read. Communication information detector 102D reads the information from USIM card 1002 (S252). After the reading processing, USIM card 1002 transmits to communication information detector 102D a response signal to finish the reading (S262).

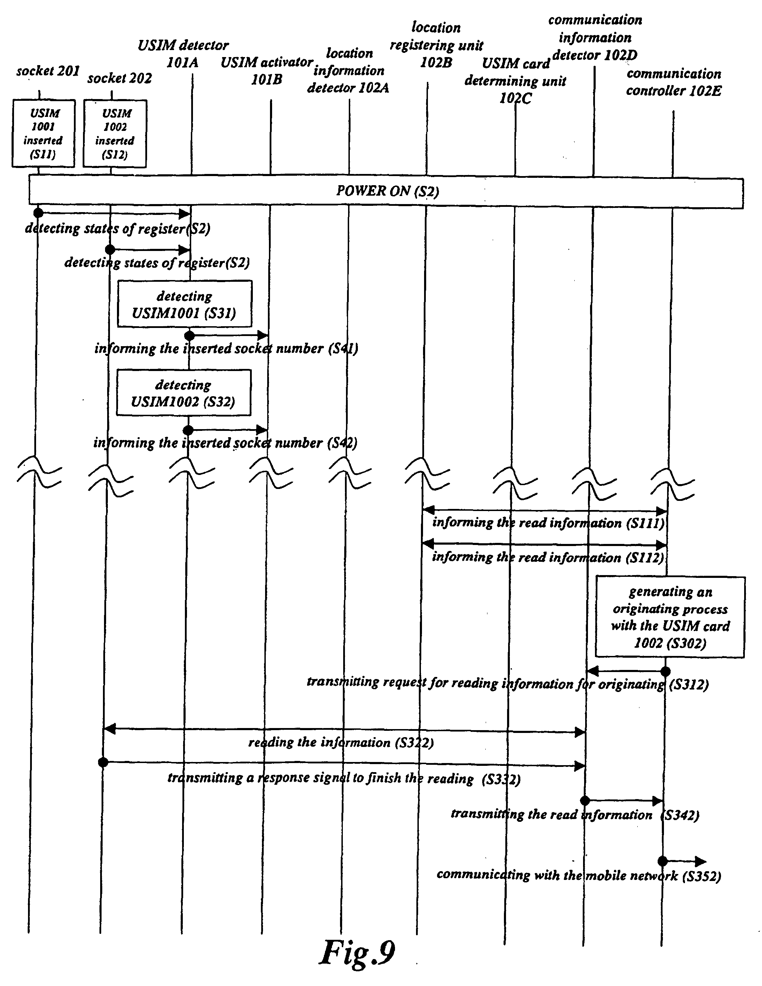

FIG. 9 shows an example of an originating process carried out after a location registration using plural USIM cards is completed. The steps S11, S12, S2, S31, S41, S32, S42, S111 and S112 shown in FIG. 9 are same as the correspondingly numbered steps shown in FIG. 4. In this embodiment, the USIM card for communicating with the mobile network can be selected by a key operation of a user.

When a user generates a call originating process with USIM card 1002 in the radio communication apparatus (S302), communication controller 102E transmits a request for reading information for communicating with the mobile network to communication information detector 102D (S312). Communication information detector 102D reads the information from USIM card 1002 (S322). After the reading processing, USIM card 1002 transmits to communication information detector 102D a response signal to finish the reading (S332). Communication information detector 102D transmits the read information to communication controller 102E (S342). Communication controller 102E communicates to the mobile network the transmitted information (S352).

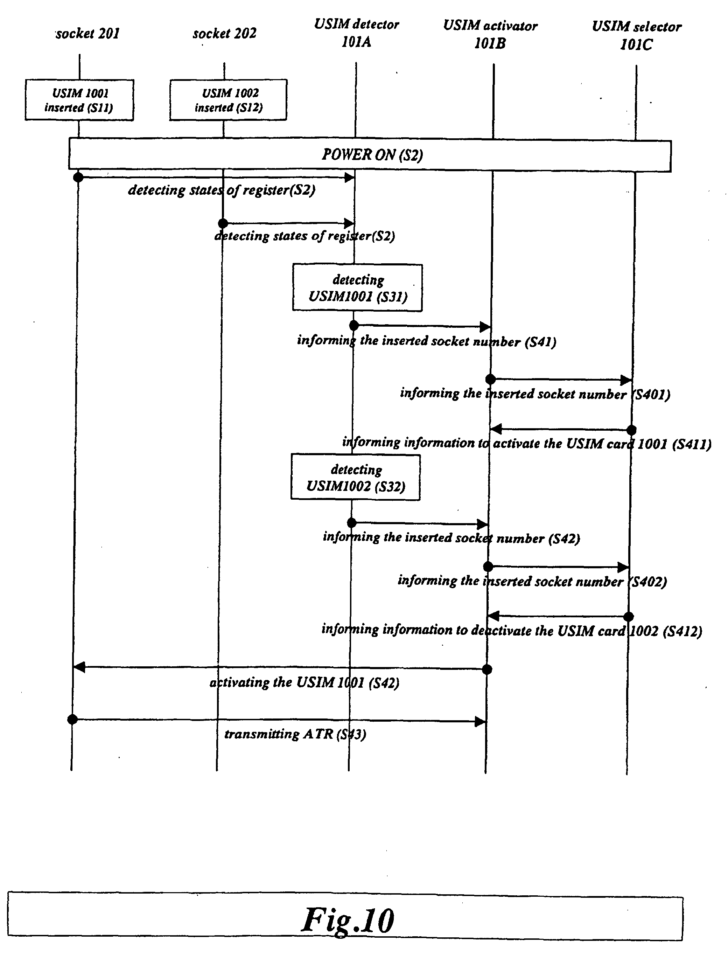

Each of FIGS. 10 to 13 shows a process carried out in the radio communication apparatus for automatically selecting a USIM card in the case that plural USIM cards are mounted in the apparatus.

FIG. 10 shows an exemplary process for switching an activated USIM card. In this embodiment, USIM selector 101C can select USIM card 1001 to activate according to a condition of the mobile apparatus. For example, when a power source in the communication apparatus is turned on by a user or automatically, after USIM card 1001 is inserted into socket 201 (S11) and USIM card 1002 is inserted into socket 202 (S12), detector 221 detects states of register in drivers 241 and 242 (S2). USIM detector 101A detects that USIM 1001 is inserted in socket 201 with reference to the detected states (S31). USIM detector 101A informs USIM activator 101B of the inserted socket number (S41). USIM activator 101B informs USIM selector 101C of the socket number (S401).

As described above, USIM selector 101C can select USIM card 1001 to activate according to a condition of the mobile apparatus. USIM selector 101C informs USIM activator 101B of information to activate USIM card 1001 (S411). For example, the condition in the mobile apparatus can be a time that USIM selector 101C detects. USIM selector 101C may select the USIM card to activate on the basis of the detected time. USIM selector 101C can select USIM card 1001 in the morning, and USIM card 1002 in the night, for example. Another condition can be a match of the MCC communicated by a mobile network and country code of the USIM card. If USIM card 1001, which has a country code "A", and USIM card 1002, which has a country code "B", are inserted in the radio communication apparatus, and the MCC communicated by the network is "A", USIM selector 101C selects USIM card 1001 to activate in the radio communication apparatus. Another condition can be a cumulative time of calling to a particular country in the radio communication apparatus. For example, the apparatus has a USIM card 1001 whose country code is Japan, and a USIM card 1002 whose country code is Korea, and the user always, or usually, places calls to Japan from Korea, USIM selector 101C may select USIM card 1001 to activate in the radio communication apparatus, because the cumulative time to call to Japan is bigger than that to Korea. These conditions can be set by a user of the radio communication apparatus.

USIM detector 101A detects that USIM 1002 is inserted in socket 202 with reference to the detected states (S32). USIM detector 101A informs USIM activator 101B of the inserted socket number (S42). USIM activator 101B informs USIM selector 101C of the socket number (S402). As described above, USIM selector 101C selects USIM card 1001 to activate in advance, in this embodiment. USIM selector 101C informs USIM activator 101B of information to deactivate USIM card 1002 (S412). USIM activator 101B activates USIM 1001 inserted in socket 201 (S42). In this action, power and clock signals are supplied to USIM 1001 for communicating with a mobile network using USIM 1001. After being activated, USIM card 1001 transmits ATR to USIM activator 101B (S43). USIM activator 101B can recognize that activation of USIM card 1001 has been completed upon receiving the ATR.

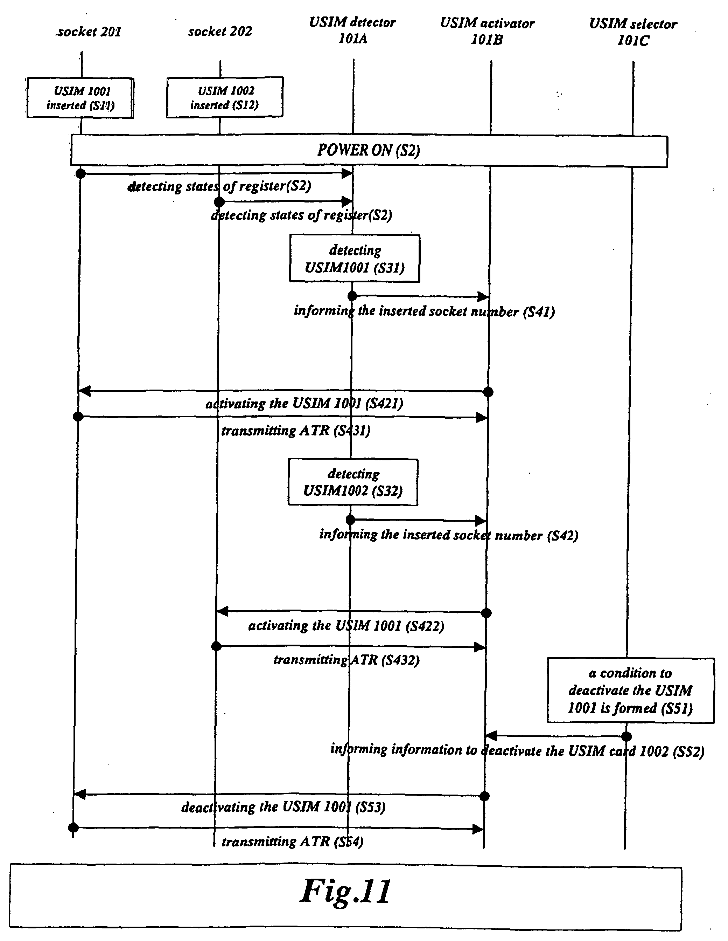

FIG. 11 shows an exemplary process for changing an activated USIM card to a deactivated one. In this embodiment, USIM selector 101C can select USIM card 1001 to deactivate according to the above-described condition of the mobile apparatus. When a power source in the communication apparatus is turned on by a user or automatically, after USIM card 1001 is inserted into the socket 201 (S11) and USIM card 1002 is inserted into socket 202 (S12), detector 221 detects states of register in driver 241 and driver 242 (S2). USIM detector 101A detects that USIM 1001 is inserted in socket 201 with reference to the detected states (S31). USIM detector 101A informs USIM activator 101B of the inserted socket number (S41).

USIM activator 101B activates USIM 1001 inserted in socket 201 (S421). In this action, power and clock signals are supplied to USIM card 1001, for communicating with a mobile network using USIM card 1001. After being activated, USIM 1001 transmits ATR to USIM activator 101B (S431). USIM activator 101B can recognize that the activation of the USIM card 1001 has been completed upon receiving the ATR.

USIM detector 101A detects that USIM 1002 is inserted in socket 202 with reference to the detected states (S32). USIM detector 101A informs USIM activator 101B of the occupied socket number (S42). USIM activator 101B activates USIM 1002 inserted in socket 202 (S422). In this action, power and clock signals are supplied to USIM 1002 for communicating with a mobile network using USIM card 1002. After being activated, USIM 1002 transmits ATR to USIM activator 101B (S432). USIM activator 101B can recognize that the activation of the USIM card 1002 has been completed by receiving the ATR.

When an above-described condition to deactivate the USIM card 1001 is formed (S51), USIM selector 101C communicates to USIM activator 101B information to deactivate USIM card 1001 (S52). USIM activator 101B deactivates USIM 1001 inserted in socket 201 (S53). After being deactivated, USIM 1001 transmits ATR to USIM activator 101B (S54).

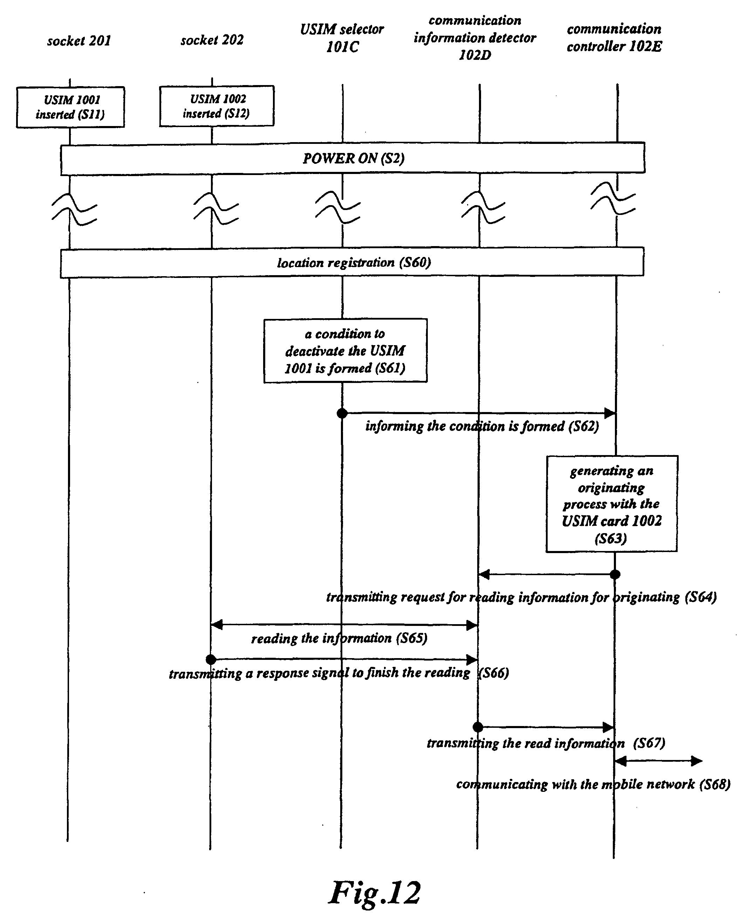

FIG. 12 shows a process for switching a USIM card with which to communicate. USIM card 1001 and USIM card 1002 are set to complete the registration of location information with a network (S60). The process used may be the same as that described in FIG. 4, up to and through the location information registering process.

When an above-described condition to deactivate the USIM card 1001 is formed (S61), USIM selector 101C communicates to communication controller 101E information to deactivate USIM card 1001 (S62). When a user generates a call originating process with USIM card 1002 in the radio communication apparatus (S63), communication controller 102E transmits a request, for reading information for communicating with the mobile network, to communication information detector 102D (S64). Communication information detector 102D reads the information from USIM card 1002 (S65). After the reading processing, USIM card 1002 transmits a response signal to finish the reading, to communication information detector 102D (S66). The communication information detector 102D transmits the read information to communication controller 102E (S67). Communication controller 102E communicates to the mobile network the transmitted information (S68). When an originating process with USIM card 1001 is generated in this state, notification of invalidation of the origination process using USIM card 1001 is provided to a user by e.g., displaying this notification in a display of the radio communication apparatus.

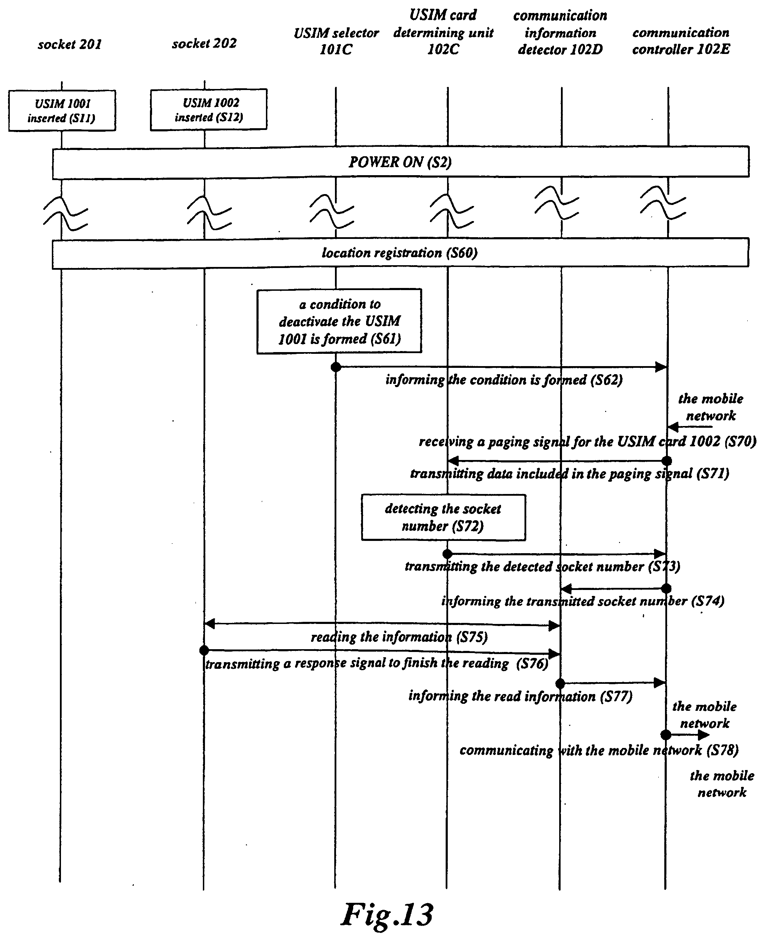

FIG. 13 shows another process for switching a USIM card with which to communicate. Both USIM card 1001 and USIM card 1002 are set to complete the registration of location information with a network (S60). The process used may be the same as that described in FIG. 4, up to and through the location information registering process.

When an above-described condition to deactivate the USIM card 1001 is formed (S61), USIM selector 101C communicates to communication controller 101E information to deactivate USIM card 1001 (S62). After this process, communication controller 102E cannot communicate with a mobile network using USIM card 1001.

Communication controller 102E monitors a paging signal received from a mobile network and determines whether the monitored paging signal is for paging USIM card 1001 or USIM card 1002 (S70). The paging signal is for paging USIM card 1002 in this example.

After communication controller 102E detects that the paging signal is for paging USIM card 1002, paging channel data included in the paging signal is transmitted to USIM card determining unit 102C to identify a socket number (S71). USIM card determining unit 102C detects the socket number of USIM card 1002 from the transmitted data (S72). USIM card determining unit 102C transmits the detected socket number of USIM card 1002 to communication controller 102E (S73). Communication controller 102E informs communication information detector 102D of the transmitted socket number, to read information for communicating with the mobile network (S74). Communication information detector 102D reads the information from USIM card 1002 (S75). After the reading processing, USIM card 1002 transmits a response signal to finish the reading to the communication information detector 102D (S76). Communication information detector 102D informs communication controller 102E of the read information (S77). After the read information is received, communication controller 102E communicates with the mobile network (S78).

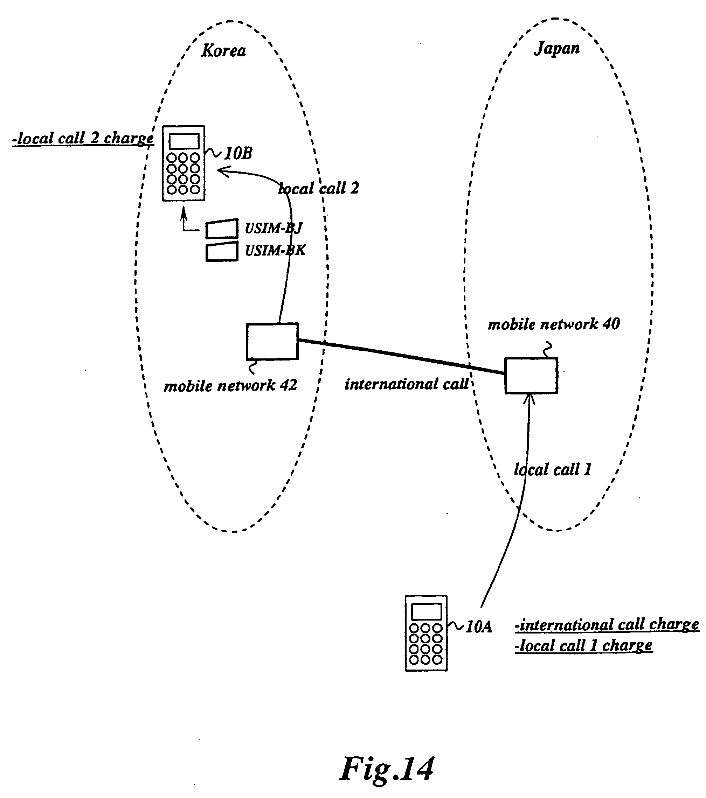

FIG. 14 shows an exemplary application of automatic selection from among plural USIM cards mounted in a radio communication apparatus, to communicate with a mobile network. In this example, a radio communication apparatus 10B can communicate with a mobile network using a USIM card BJ or a USIM card BK. The USIM cards are inserted into apparatus 10B. USIM card BJ has a country code indicating Japan. USIM card BK has a country code indicating Korea. Apparatus 10B is set in advance to communicate with the mobile network using only an inserted USIM card, having a country code which is the same as the MCC broadcasted by the mobile network. If apparatus 10B is located in Korea, apparatus 10B selects USIM card BK to communicate with a mobile network 42 and communicates with the mobile network 42 in Korea using only USIM card BK.

In a mobile communication network system of the prior art, a radio apparatus accommodates only one USIM card. If the USIM card has a country code which indicates Japan, the home location of Japan is registered in the mobile network 40. When the user of a radio communication apparatus 10A originates a call to a radio communication apparatus in Korea, a local call 1 (shown in FIG. 14) charge is charged to the user of apparatus 10A. The international call charge (shown in FIG. 14) and local charge 2 (shown in FIG. 14) are paid by the user of the apparatus in Korea.

On the other hand, in accordance with the invention, apparatus 10B has selected card BK which is registered in mobile network 42. When the user of radio communication apparatus 10A originates a call to radio communication apparatus 10B, a local call 1 charge and an international call charge are charged to the user of apparatus 10A. Local charge 2 is paid by the user of the apparatus 10B. This process helps the user of the apparatus 10B decrease a call charge.

As mentioned above, plural mounted USIM cards can be selectively used by recognizing the USIM cards in a mobile communication apparatus, and selectively individually accessing each of the USIM cards. Further, a mobile communication apparatus can communicate with selected ones of the plural USIM cards, to reduce the call charges to the mobile communication apparatus.

While the invention has been described with respect to specific examples including presently preferred modes of carrying out the invention, those skilled in the art will appreciate that there are numerous other embodiments, and variations and permutations of the above described exemplary embodiments, that fall within the scope and spirit of the invention as set forth in the appended claims.

## Claims

1. A mobile communication apparatus for communicating with a network selectively utilizing a plurality of IC units (1001, 1002) connected to the apparatus, each of the IC units (1001, 1002) having data for establishing a communication link with the network, the apparatus comprising:
a detector (221, 222) configured to detect each of the IC units (1001, 1002) connected to the apparatus;
an activator (101B) configured to activate at least one of the detected IC units (1001, 1002) for communication with the network;
a controller (101) (101A) configured to inform the network of data in the activated IC unit/units (1001, 1002); and
a selector (101C) configured to select an activated IC unit (1001, 1002) for use in establishing a communication link with the network,
**characterized in that**
the selector (101C) is configured to select an activated IC unit (1001, 1002) for use in establishing a communication link with the network based upon received location data from the network.

2. The mobile communication apparatus according to claim 1, wherein the activator (101B) is configured to activate more than one of the detected IC units (1001, 1002) for communication with the network.

3. The mobile communication apparatus according to claim 1 or 2, wherein the activator (101B) is further configured to deactivate a non-selected IC unit (1001, 1002).

4. The mobile communication apparatus according to one of the preceding claims, wherein said selector (101C) further base the selection upon a time at which the mobile communication apparatus is used.

5. The mobile communication apparatus according to one of the preceding claims, comprising integrating of a location information from data broadcasted from the network in the selection of the activated IC unit (1001, 1002).

6. The mobile communication apparatus according to one of the preceding claims, comprising integrating of a location information indicating a country where the mobile communication apparatus is located from data broadcasted from the network in the selection of the activated IC unit (1001, 1002).

7. The mobile communication apparatus according to one of the preceding claims, comprising the plurality of IC units (1001, 1002), wherein each IC unit (1001, 1002) has a country code indicating a home location of the mobile communication apparatus, and the selector (101C) selects for use in establishing a communication link with the network an activated IC unit (1001, 1002) the home location code of which being received data broadcasted from the network.

8. A mobile communication apparatus according to one of the preceding claims, the apparatus further comprising:
a plurality of sockets (201, 202) configured to receive said plurality of IC units (1001, 1002);
a detector (221, 222) configured to detect an IC unit (1001, 1002) received in a said socket (201, 202);
an activator (101B) configured to activate the detected IC unit (1001, 1002) for communication with the network; and
a controller (101) configured to inform the network of data in the activated IC unit (1001, 1002).

9. The mobile communication apparatus according to claim 8, wherein said activator (101B) is configured to activate a second IC unit (1001, 1002) inserted into one of said sockets (201, 202) after a first unit has been inserted into another socket (201, 202).

10. A method for selectively utilizing a plurality of IC units (1001, 1002) connected to a mobile communication apparatus for communicating with a network, each of the IC units (1001, 1002) having data for establishing a communication link with the network, the method comprising:
detecting each of the IC units (1001, 1002) connected to the apparatus;
activating at least one of the detected IC units (1001, 1002) for communication with the network; and
informing the network of data in the activated IC unit/units (1001, 1002);
selecting an activated IC unit (1001, 1002) for use in establishing a communication link with the network;
**characterized by**
carrying out said selecting of an activated IC unit (1001, 1002) based on received location data from the network.

11. The method according to claim 10, wherein more than one of the detected IC units (1001, 1002) are activated for communication with the network.

12. The method according to one of the claims 10 and 11, further comprising deactivating a non-selected IC unit (1001, 1002).

13. The method according to one of the claims 10 to 12, wherein said selecting of an activated IC unit (1001, 1002) is further based upon a time at which the mobile communication apparatus is used.

14. The method according to one of the claims 10 to 13, wherein selecting the activated IC unit (1001, 1002) is carried out based on received data broadcasted from the network and indicating a location of the mobile communication apparatus.

15. The method according to one of the claims 10 to 14, wherein selecting the activated IC unit (1001, 1002) is carried out based on received data broadcasted from the network and indicating a country where the mobile communication apparatus is located.

16. The method according to one of the claims 10 to 15, wherein each IC unit (1001, 1002) has a country code indicating a home location of the mobile communication apparatus, and wherein an activated IC unit (1001, 1002) that has a broadcasted location code is selected for use in establishing a communication link with the network.

17. The method according to one of the claims 10 to 16 carried out in a mobile communication apparatus for communicating with a network, said apparatus having a plurality of sockets (201, 202) for receiving the IC units (1001, 1002) and connecting them to the apparatus.

18. The method according to claim 17, further comprising activating a second IC unit (1001, 1002) inserted into one of said sockets (201, 202), after a first unit has been inserted into the other socket (201, 202).

## Patentansprüche

1. Mobilkommunikationseinrichtung zum Kommunizieren mit einem Netz unter selektivem Verwenden einer Vielzahl von IC-Einheiten (1001, 1002), die mit der Einrichtung verbunden sind, wobei jede der IC-Einheiten (1001, 1002) Daten hat zum Einrichten einer Kommunikationsverbindung mit dem Netz, wobei die Einrichtung umfasst:
einen Detektor (221, 222), eingerichtet zum Erfassen jeder der mit der Einrichtung verbundenen IC-Einheiten (1001, 1002);
einen Aktivierer (101B), eingerichtet zum Aktivieren mindestens einer der erfassten IC-Einheiten (1001, 1002) zum Kommunizieren mit dem Netz;
einen Controller (101, 101A), eingerichtet zum Informieren des Netzes bezüglich Daten in der/den aktivierten IC-Einheit/IC-Einheiten (1001, 1002); und
einen Selektor (101C), eingerichtet zum Auswählen einer aktivierten IC-Einheit (1001, 1002) zur Verwendung beim Einrichten einer Kommunikationsverbindung mit dem Netz,
**dadurch gekennzeichnet, dass**
der Selektor (101C) eingerichtet ist zum Auswählen einer aktivierten IC-Einheit (1001, 1002) zur Verwendung beim Einrichten einer Kommunikationsverbindung mit dem Netz basierend auf von dem Netz empfangenen Ortsdaten.

2. Mobilkommunikationseinrichtung nach Anspruch 1, wobei der Aktivierer (101B) eingerichtet ist zum Aktivieren von mehr als einer der erfassten IC-Einheiten (1001, 1002) zum Kommunizieren mit dem Netz.

3. Mobilkommunikationseinrichtung nach Anspruch 1 oder 2, wobei der Aktivierer (101B) ferner eingerichtet ist zum Deaktivieren einer nicht ausgewählten IC-Einheit (1001, 1002).

4. Mobilkommunikationseinrichtung nach einem der vorangehenden Ansprüche, wobei der Selektor (101C) außerdem das Auswählen auf eine Zeit basiert, zu der die Mobilkommunikationseinrichtung verwendet wird.

5. Mobilkommunikationseinrichtung nach einem der vorhergehenden Ansprüche, das Integrieren einer Ortsinformation von Daten, die vom Netz rundgesendet worden sind, in das Auswählen der aktivierten IC-Einheit (1001, 1002) umfassend.

6. Mobilkommunikationseinrichtung nach einem der vorhergehenden Ansprüche, das Integrieren einer Ortsinformation, die ein Land angibt, in dem die Mobilkommunikationseinrichtung sich befindet, aus von dem Netz rundgesendeten Daten beim Auswählen der aktivierten IC-Einheit (1001, 1002) umfassend.

7. Mobilkommunikationseinrichtung nach einem der vorhergehenden Ansprüche, die Vielzahl von IC-Einheiten (1001, 1002) umfassend, wobei jede IC-Einheit (1001, 1002) einen Ländercode hat, der einen Heimatort der Mobilkommunikationseinrichtung anzeigt und der Selektor (101C) zur Verwendung des Einrichtens einer Kommunikationsverbindung mit dem Netz eine aktivierte IC-Einheit (1001, 1002) auswählt, deren Heimatortcode zu den vom Netz rundgesendeten empfangenen Daten gehört.

8. Mobilkommunikationseinrichtung nach einem der vorhergehenden Ansprüche, wobei die Einrichtung außerdem umfasst:
eine Vielzahl von Verbindungsaufnahmen bzw. Sockets (201, 202), eingerichtet zum Aufnehmen der Vielzahl von IC-Einheiten (1001, 1002);
einen Detektor (221, 222), eingerichtet zum Erfassen einer in dem Socket (201, 202) aufgenommenen IC-Einheit (1001, 1002);
einen Aktivierer (101B), eingerichtet zum Aktivieren der erfassten IC-Einheit (1001, 1002) zur Kommunikation mit dem Netz; und
eine Controller (101), eingerichtet zum Informieren des Netzes bezüglich Daten in der aktivierten IC-Einheit (1001, 1002).

9. Mobilkommunikationseinrichtung nach Anspruch 8, wobei der Aktivierer (101B) eingerichtet ist zum Aktivieren einer zweiten IC-Einheit (1001, 1002), die in einen der Sockets (201, 202) eingefügt worden ist, nachdem eine erste Einheit in einen anderen Socket (202, 202) eingefügt worden ist.

10. Verfahren zum selektiven Verwenden einer Vielzahl von IC-Einheiten (1001, 1002), die mit einer Mobilkommunikationseinrichtung zum Kommunizieren mit einem Netz verbunden sind, wobei jede der IC-Einheiten (1001, 1002) Daten zum Einrichten einer Kommunikationsverbindung mit dem Netz hat und das Verfahren umfasst:
Erfassen jeder der mit der Einrichtung verbundenen IC-Einheiten (1001, 1002);
Aktivieren mindestens einer der erfassten IC-Einheiten (1001, 1002) zum Kommunizieren mit dem Netz; und
Informieren des Netzes bezüglich Daten in der/den aktivierten IC-Einheit/IC-Einheiten (1001, 1002);
Auswählen einer aktivierten IC-Einheit (1001, 1002) zur Verwendung beim Einrichten einer Kommunikationsverbindung mit dem Netz;
**gekennzeichnet durch**
das Ausführen des Auswählens einer aktivierten IC-Einheit (1001, 1002) basierend auf vom Netz empfangenen Ortsdaten.

11. Verfahren nach Anspruch 10, wobei mehr als eine der erfassten IC-Einheiten (1001, 1002) aktiviert werden zur Kommunikation mit dem Netz.

12. Verfahren nach einem der Ansprüche 10 und 11, außerdem ein Deaktivieren einer nicht ausgewählten IC-Einheit (1001, 1002) umfassend.

13. Verfahren nach einem der Ansprüche 10 bis 12, wobei das Auswählen einer aktivierten IC-Einheit (1001, 1002) ferner basiert auf einer Zeit, zu der die Mobilkommunikationseinrichtung verwendet wird.

14. Verfahren nach einem der Ansprüche 10 bis 13, wobei das Auswählen der aktivierten IC-Einheit (1001, 1002) ausgeführt wird basierend auf empfangenen Daten, die vom Netz rundgesendet werden und einen Ort der Mobilkommunikationseinrichtung angeben.

15. Verfahren nach einem der Ansprüche 10 bis 14, wobei das Auswählen der aktivierten IC-Einheit (1001, 1002) ausgeführt wird basierend auf vom Netz rundgesendeten Daten, die ein Land angeben, in dem sich die Mobilkommunikationseinrichtung befindet.

16. Verfahren nach einem der Ansprüche 10 bis 15, wobei jede IC-Einheit (1001, 1002) einen Ländercode hat, der einen Heimatort der Mobilkommunikationseinrichtung angibt und wobei eine aktivierte IC-Einheit (1001, 1002), die einen rundgesendeten Ortscode hat, ausgewählt wird für die Verwendung des Einrichtens einer Kommunikationsverbindung mit dem Netz.

17. Verfahren nach einem der Ansprüche 10 bis 16, ausgeführt in einer Mobilkommunikationseinrichtung zur Kommunikation mit einem Netz, wobei die Einrichtung eine Vielzahl von Sockets (201, 202) umfasst zum Aufnehmen der IC-Einheiten (1001, 1002) und Verbinden von ihnen mit der Einrichtung.

18. Verfahren nach Anspruch 17, außerdem das Aktivieren einer zweiten IC-Einheit (1001, 1002) umfassend, die eingefügt ist in einen der Sockets (201, 202), nachdem eine erste Einheit in den anderen Socket (201, 202) eingefügt worden ist.

## Revendications

1. Appareil de communication mobile pour communiquer avec un réseau en utilisant de façon sélective une pluralité d'unités IC (1001, 1002) qui sont connectées à l'appareil, chacune des unités IC (1001, 1002) disposant de données pour établir une liaison de communication avec le réseau, l'appareil comprenant :
un détecteur (221, 222) qui est configuré pour détecter chacune des unités IC (1001, 1002) qui sont connectées à l'appareil ;
un activateur (101B) qui est configuré pour activer au moins l'une des unités IC détectées (1001, 1002) pour une communication avec le réseau ;
un contrôleur (101) (101A) qui est configuré pour informer le réseau de données dans l'unité IC activée (1001, 1002)/dans les unités IC activées (1001, 1002) ; et
un sélecteur (101C) qui est configuré pour sélectionner une unité IC activée (1001, 1002) pour une utilisation au niveau de l'établissement d'une liaison de communication avec le réseau,
**caractérisé en ce que** :
le sélecteur (101C) est configuré pour sélectionner une unité IC activée (1001, 1002) pour une utilisation au niveau de l'établissement d'une liaison de communication avec le réseau sur la base de données de localisation reçues à partir du réseau.

2. Appareil de communication mobile selon la revendication 1, dans lequel l'activateur (101B) est configuré pour activer plus d'une des unités IC détectées (1001, 1002) pour une communication avec le réseau.

3. Appareil de communication mobile selon la revendication 1 ou 2, dans lequel l'activateur (101B) est en outre configuré pour désactiver une unité IC non sélectionnée (1001, 1002).

4. Appareil de communication mobile selon l'une quelconque des revendications précédentes, dans lequel ledit moyen de sélection base en outre la sélection sur un temps auquel l'appareil de communication mobile est utilisé.

5. Appareil de communication mobile selon l'une quelconque des revendications précédentes, comprenant l'intégration d'une information de localisation en provenance de données qui sont diffusées depuis le réseau lors de la sélection de l'unité IC activée (1001, 1002).

6. Appareil de communication mobile selon l'une quelconque des revendications précédentes, comprenant l'intégration d'une information de localisation indiquant un pays où l'appareil de communication mobile est localisé en provenance de données qui sont diffusées depuis le réseau lors de la sélection de l'unité IC activée (1001, 1002).

7. Appareil de communication mobile selon l'une quelconque des revendications précédentes, comprenant la pluralité d'unités IC (1001, 1002), dans lequel chaque unité IC (1001, 1002) dispose d'un code de pays qui indique une localisation domestique de l'appareil de communication mobile, et le sélecteur (101C) sélectionne pour une utilisation lors de l'établissement d'une liaison de communication avec le réseau une unité IC activée (1001, 1002) dont le code de localisation domestique est constitué par des données reçues diffusées depuis le réseau.

8. Appareil de communication mobile selon l'une quelconque des revendications précédentes, l'appareil comprenant en outre :
une pluralité de raccords (201, 202) qui sont configurés pour recevoir ladite pluralité d'unités IC (1001, 1002) ;
un détecteur (221, 222) qui est configuré pour détecter une unité IC (1001, 1002) qui est reçue dans un dit raccord (201, 202) ;
un activateur (101B) qui est configuré pour activer l'unité IC détectée (1001, 1002) pour une communication avec le réseau ; et
un contrôleur (101) qui est configuré pour informer le réseau de données dans l'unité IC activée (1001, 1002).

9. Appareil de communication mobile selon la revendication 8, dans lequel ledit activateur (101B) est configuré pour activer une seconde unité IC (1001, 1002) qui est insérée dans l'un desdits raccords (201, 202) après qu'une première unité a été insérée dans un autre raccord (201, 202).

10. Procédé pour utiliser de façon sélective une pluralité d'unités IC (1001, 1002) qui sont connectées à un appareil de communication mobile pour communiquer avec un réseau, chacune des unités IC (1001, 1002) disposant de données pour établir une liaison de communication avec le réseau, le procédé comprenant :
la détection de chacune des unités IC (1001, 1002) qui sont connectées à l'appareil ;
l'activation d'au moins l'une des unités IC détectées (1001, 1002) pour une communication avec le réseau ; et
l'information du réseau quant à des données dans l'unité IC activée (1001, 1002)/dans les unités IC activées (1001, 1002) ;
la sélection d'une unité IC activée (1001, 1002) pour une utilisation lors de l'établissement d'une liaison de communication avec le réseau,
**caractérisé par** :
la mise en oeuvre de ladite sélection d'une unité IC activée (1001, 1002) sur la base de données de localisation reçues depuis le réseau.

11. Procédé selon la revendication 10, dans lequel plus d'une des unités IC détectées (1001, 1002) sont activées pour une communication avec le réseau.

12. Procédé selon l'une quelconque des revendications 10 et 11, comprenant en outre la désactivation d'une unité IC non sélectionnée (1001, 1002).

13. Procédé selon l'une quelconque des revendications 10 à 12, dans lequel ladite sélection d'une unité IC activée (1001, 1002) est en outre basée sur un temps auquel l'appareil de communication mobile est utilisé.

14. Procédé selon l'une quelconque des revendications 10 à 13, dans lequel la sélection de l'unité IC activée (1001, 1002) est mise en oeuvre sur la base de données reçues qui sont diffusées depuis le réseau et qui indiquent une localisation de l'appareil de communication mobile.

15. Procédé selon l'une quelconque des revendications 10 à 14, dans lequel la sélection de l'unité IC activée (1001, 1002) est mise en oeuvre sur la base de données reçues qui sont diffusées depuis le réseau et qui indiquent un pays où l'appareil de communication mobile est localisé.

16. Procédé selon l'une quelconque des revendications 10 à 15, dans lequel chaque unité IC (1001, 1002) dispose d'un code de pays indiquant une localisation domestique de l'appareil de communication mobile et dans lequel une unité IC activée (1001, 1002) qui dispose d'un code de localisation diffusé est sélectionnée pour une utilisation au niveau de l'établissement d'une liaison de communication avec le réseau.

17. Procédé selon l'une quelconque des revendications 10 à 16, mis en oeuvre dans un appareil de communication mobile pour communiquer avec un réseau, le dit appareil comportant une pluralité de raccords (201, 202) pour recevoir les unités IC (1001, 1002) et pour les connecter à l'appareil.

18. Procédé selon la revendication 17, comprenant en outre l'activation d'une seconde unité IC (1001, 1002) insérée dans l'un desdits raccords (201, 202) après qu'une première unité a été insérée dans l'autre raccord (201, 202).
